# EUROPEAN PATENT APPLICATION

(11) **EP 2 789 968 A1**
(43) Date of publication of application: **15.10.2014**
(21) Application number: 12854981.3
(22) Date of filing: 12.09.2012
(51) Int. Cl.: G01B 9/02, G01B 11/00, G01B 11/24

(54) **SHAPE-MEASURING DEVICE**

(30) Priority: 07.12.2011 JP 2011268057
(71) Applicant: Konica Minolta, Inc., Tokyo 100-7015 (JP)
(72) Inventor: MIKOSHIBA, Hironobu, Chiyoda-ku Tokyo 100-7015 (JP); TAKITANI, Toshiya, Chiyoda-ku Tokyo 100-7015 (JP)
(74) Representative: Gille Hrabal
(86) International application number: PCT/JP2012/073368
(87) International publication number: WO 2013/084557

(57) **Abstract**

[Object] Provided is a shape measuring apparatus capable of accurately identifying a relative position of an interference objective lens with respect to a stage at the time that a white light interference moire is imaged, without being affected by minute fluctuation in relative distance between the stage and an interference optical system originating from vibration of the shape measuring apparatus, tolerance of driving accuracy of a drive stage, temperature fluctuation, and distortion of parts, thereby measuring a workpiece shape.

[Solution] A shape measuring apparatus (1) measures a workpiece shape utilizing white light interference, and includes a stage (10) on which a workpiece (W) is placed, an interference optical system (100) that irradiates the workpiece (W) with white light (WL) to generate a white light interference moire, a drive unit (26) that moves one of the stage and the interference optical system in a direction of an optical axis, a length measuring device (50) that measures a relative distance (L) between the stage and the interference optical system changed by the drive unit, and an imaging unit (40) that images the white light interference moire to acquire contrast information of the white light interference moire that changes according to the relative distance.

## Description

### Technical Field

The present invention relates to a shape measuring apparatus configured to measure a shape of a workpiece by using white light interference.

### Background Art

In a shape measuring apparatus that measures the shape of a workpiece utilizing white light interference, an interference optical system is made to relatively scan over the workpiece in the direction of the optical axis to thereby acquire a white light interference moire, in order to detect a peak position of the contrast of the white light interference moire. For the scanning, generally a piezo stage mechanism with a displacement meter such as a static capacitance sensor is employed for controlling the scanning amount with high accuracy.

In relation to the above, Patent Literature (PTL) 1 cited below discloses a technique of forming a reflecting film on the surface of an interference objective lens included in the interference optical system, and irradiating the reflecting film with a laser beam thereby measuring a displacement amount of the interference objective lens. This technique provides higher measurement accuracy of movement of the interference objective lens compared with the case of utilizing the static capacitance sensor incorporated in the piezo stage mechanism, and therefore achieves higher measurement accuracy with respect to the workpiece shape.

Now, in the measurement of the workpiece shape, the relative distance between the stage and the interference objective lens fluctuates in a minute amount, owing to vibration of the shape measuring apparatus, tolerance of driving accuracy of the drive stage, temperature fluctuation, and distortion of parts.

With the technique according to PTL 1, however, only the displacement of the interference objective lens is measured, and hence the measurement result is affected by the minute fluctuation of the relative distance. Accordingly, it is difficult to accurately measure the relative position of the interference objective lens with respect to the stage, at the time that the white light interference moire is imaged, which leads to degradation in measurement accuracy of the workpiece shape.

### Citation List

### Patent Literature

PTL 1: Japanese Unexamined Patent Application Publication No. 2010-237183

### Summary of Invention

### Technical Problem

The present invention has been accomplished to solve the foregoing problem, with an object to provide a shape measuring apparatus capable of accurately identifying a relative position of an interference objective lens with respect to the stage of an interference optical system at the time that a white light interference moire is imaged, without being affected by minute fluctuation in relative distance between the stage and the interference optical system originating from vibration of the shape measuring apparatus, tolerance of driving accuracy of a drive stage, temperature fluctuation, and distortion of parts, thereby measuring a workpiece shape.

### Solution to Problem

The mentioned object of the present invention is achieved by the following configuration.
(1) A shape measuring apparatus that measures a workpiece shape utilizing white light interference, including a stage on which the workpiece is placed, an interference optical system that irradiates the workpiece with white light to thereby generate a white light interference moire, a drive unit that moves a position of one of the stage and the interference optical system in a direction of an optical axis, a length measuring device that measures a relative distance between the stage and the interference optical system, the relative distance being changed by the drive unit upon moving the stage or the interference optical system, and an imaging unit that images the white light interference moire to acquire contrast information of the white light interference moire that changes according to the relative distance.
(2) The shape measuring apparatus according to (1) above, further including a storage unit that stores therein distance information acquired by measuring the relative distance with the length measuring device and image information acquired by imaging the white light interference moire with the imaging unit, in association with each other.
(3) The shape measuring apparatus according to (1) or (2) above, further including a first control unit that transmits a trigger signal to the imaging unit according to the distance information acquired by measuring the relative distance with the length measuring device. The imaging unit images the white light interference moire when the trigger signal is transmitted.
(4) The shape measuring apparatus according to (3) above, in which the first control unit transmit the trigger signal to the imaging unit each time the relative distance measured by the length measuring device varies by a predetermined amount.
(5) The shape measuring apparatus according to (1) or (2) above, further including a second control unit that simultaneously transmits a length measurement trigger signal and an image pickup trigger signal to the length measuring device and the imaging unit, respectively. The length measuring device measures the relative distance when the length measurement trigger signal is transmitted, and the imaging unit images the white light interference moire when the image pickup trigger signal is transmitted.
(6) The shape measuring apparatus according to any one of (1) to (5) above, in which the length measuring device is provided in one of the interference optical system and the stage.
(7) The shape measuring apparatus according to any one of (1) to (5) above, in which the length measuring device is a laser length measuring device that outputs a first and a second laser beam, the stage includes a first mirror that reflects the first laser beam, the interference optical system includes a second mirror that reflects the second laser beam, and the relative distance between the stage and the interference optical system is measured by calculating a difference between a distance from the laser length measuring device to the stage measured by the first laser beam and a distance from the laser length measuring device to the interference optical system measured by the second laser beam.
(8) The shape measuring apparatus according to (7) above, in which the interference optical system includes an interference objective lens, the interference objective lens includes an objective lens that focuses the white light onto the workpiece, a beam splitter that splits the white light that has passed the objective lens into measurement light and reference light and synthesizes reflection of the measurement light and the reference light, and a reference mirror that reflects the reference light, the second mirror is the reference mirror, and the laser length measuring device measures the relative distance between the laser length measuring device and the interference optical system by using the second laser beam reflected by the reference mirror.
(9) The shape measuring apparatus according to any one of (1) to (8) above, in which the interference optical system includes the interference objective lens, the drive unit moves the interference objective lens in the direction of the optical axis, and the length measuring device measures the relative distance between the stage and the interference objective lens.
(10) The shape measuring apparatus according to any one of (1) to (9) above, further including a calculation unit that calculates height data of a surface of the workpiece on the basis of the distance information acquired by measuring the relative distance with the length measuring device and the image information acquired by imaging the white light interference moire with the imaging unit.

### Advantageous Effects of Invention

The present invention allows the length measuring device to measure the relative distance between the stage and the interference optical system, thereby enabling the relative position of the interference optical system with reference to the stage at the time that the white light interference moire is imaged to be accurately identified. Such a configuration allows the workpiece shape to be accurately measured, without being affected by minute fluctuation in relative distance between the stage and the interference optical system originating from vibration of the shape measuring apparatus, tolerance of driving accuracy of a drive stage, temperature fluctuation, and distortion of parts.

### BRIEF DESCRIPTION OF THE DRAWINGS

Fig. 1 is a schematic front view of a shape measuring apparatus according to a first embodiment of the present invention.
Fig. 2 is a schematic diagram for explaining an interference optical system of the shape measuring apparatus.
Fig. 3 is a schematic front view for explaining a shape measuring apparatus according to a second embodiment of the present invention.
Fig. 4 is a schematic front view for explaining a shape measuring apparatus according to a third embodiment of the present invention.

### Description of Embodiments

Hereafter, embodiments of the present invention will be described with reference to the drawings. In the drawings, the constituents may be drawn in size ratios different from the actual ones, for the sake of clarity of the description.

### First Embodiment

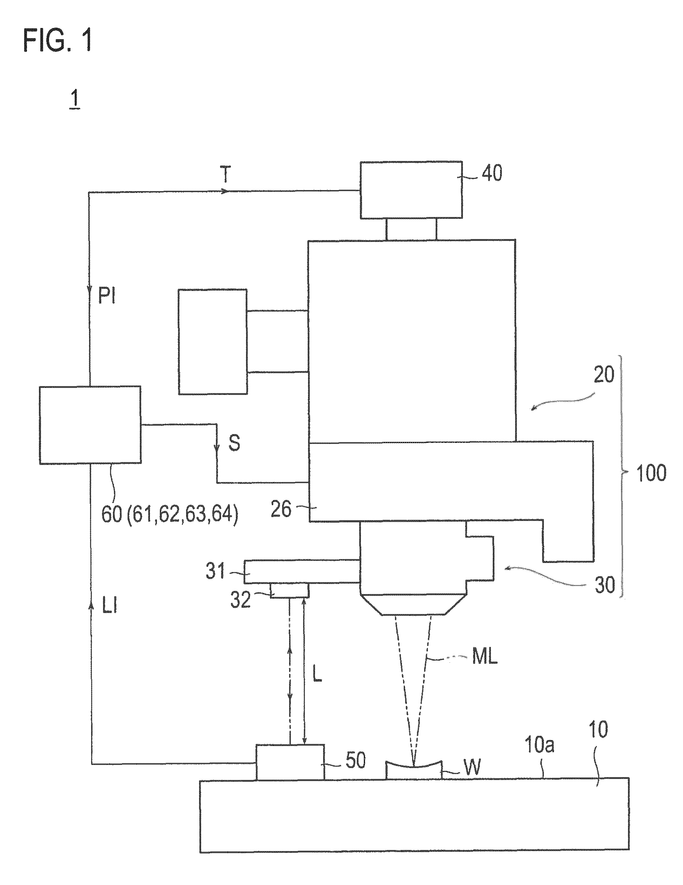

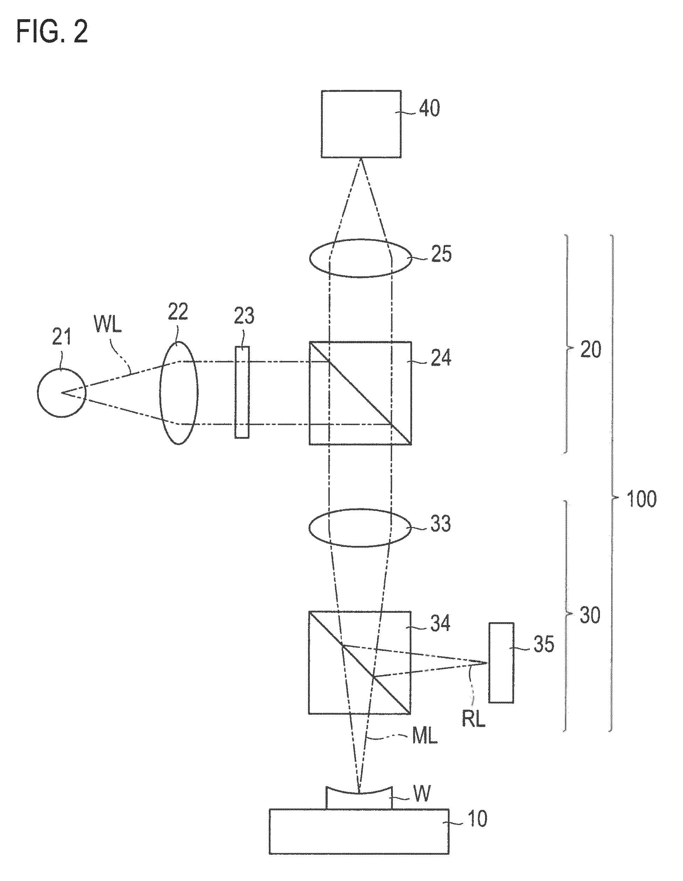

Fig. 1 is a schematic front view of a shape measuring 1 apparatus according to a first embodiment of the present invention, and Fig. 2 is a schematic diagram for explaining an interference optical system 100 of the shape measuring apparatus 1.

As shown in Fig. 1, the shape measuring apparatus 1 according to the first embodiment of the present invention includes a stage 10, a microscope main body 20, an interference objective lens 30, an imaging unit 40, a laser length measuring device 50, and a control unit 60.

A workpiece W is placed on the stage 10. The stage 10 includes a placement surface 10a on which the workpiece W is placed, and is made to move by an XY-drive stage (not shown) in a direction of the placement surface 10a.

The microscope main body 20 constitutes an optical path of white light WL. As shown in Fig. 2, the microscope main body 20 includes a white light source 21 that outputs the white light WL, a lens 22 that converts the white light WL outputted from the white light source 21 into parallel light, and a beam splitter 24 that reflects the parallel light that has passed a filter 23 toward the stage 10, so as to introduce the white light WL, now concerted into parallel light, to the interference objective lens 30. The white light source 21 is constituted, for example, of a halogen lamp or a xenon lamp. The microscope main body 20 also includes an image forming lens25 that forms an image of a white light interference moire generated by the interference objective lens 30 on the imaging unit 40. Further, the microscope main body 20 includes a Z-drive stage (not shown) that roughly adjust the position of the interference objective lens 30 in the direction of the optical axis, and a drive unit 26 that precisely moves the interference objective lens 30 in the direction of the optical axis. The drive unit 26 may be constituted, for example, of a displacement mechanism that employs a piezoelectric element.

The interference objective lens 30 irradiates the workpiece W with the white light WL provided from the microscope main body 20, to thereby generate the white light interference moire. The interference objective lens 30 is removably attached to the microscope main body 20, and constitutes an interference optical system 100 with the microscope main body 20, upon being attached thereto. A length measurement mirror 32 is attached to the interference objective lens 30 via a bracket 31, and the drive unit 26 causes the interference objective lens 30 and the length measurement mirror 32 to scan in the direction of the optical axis. The interference objective lens 30 shown in Fig. 2 is a Michelson type interference objective lens, and includes an objective lens 33 that focuses the white light WL on the workpiece W, a beam splitter 34 that splits the white light WL that has passed the objective lens 33 into measurement light ML and reference light RL, and synthesizes the reflection of the measurement light ML and the reference light RL, and a reference mirror 35 that reflects the reference light RL. Here, the interference objective lens 30 may be a Mirau type interference objective lens.

The imaging unit 40 picks up the image of the white light interference moire generated by the interference optical system 100, and transmits image information PI of the white light interference moire to the control unit 60. The imaging unit 40 may be a CCD camera for example, and is located on top of the microscope main body 20.

The laser length measuring device 50 measures a relative distance L between the stage 10 and the interference objective lens 30. More specifically, the laser length measuring device 50 is fixed onto the stage 10, and utilizes laser interference to measure the relative distance L between the stage 10 and the length measurement mirror 32 provided for the interference objective lens 30. Distance information LI indicating the relative distance L between the stage 10 and the length measurement mirror 32 measured by the laser length measuring device 50 is transmitted to the control unit 60.

The control unit 60 performs various controlling and arithmetic operations. The control unit 60 includes a reception unit 61 that receives the distance information LI transmitted from the laser length measuring device 50 and the image information PI transmitted from the imaging unit 40, a signal transmission unit 62 that transmits a trigger signal T to the imaging unit 40 and a signal S to the drive unit 26, a storage unit 63 that stores therein the distance information LI and the image information PI in association with each other, and a calculation unit 64 that calculates height data of a surface of the workpiece on the basis of the distance information LI and the image information PI stored in the storage unit 63. The control unit 60 may be, for example, a popular personal computer (PC).

In the shape measuring apparatus 1 thus configured, the light outputted from the white light source 21 is converted from diffuse light to parallel light, by the lens 22. The white light WL converted into the parallel light by the lens 22 passes the filter 23 and is reflected by the beam splitter 24, and is then incident on the interference objective lens 30. The white light WL that has entered the interference objective lens 30 is condensed by the objective lens 33 so as to focus on the surface of the workpiece.

After passing the objective lens 33, the white light WL is split by the beam splitter 34 between the objective lens 33 and the workpiece W into the measurement light ML transmitted through the beam splitter 34 and emitted to the surface of the workpiece (hereinafter the optical path through which the measurement light ML passes may be referred to as measurement optical path) and the reference light RL reflected by the beam splitter 34 and emitted to the surface of the reference mirror 35 (hereinafter the optical path through which the reference light RL passes may be referred to as reference optical path).

The measurement light ML and the reference light RL are respectively reflected by the surface of the workpiece and the surface of the reference mirror 35, and the measurement light ML and the reference light RL respectively reflected by the surface of the workpiece and the surface of the reference mirror 35 are synthesized by the beam splitter 34. At this point, the white light interference moire is generated owing to the optical path difference between the measurement optical path and the reference optical path. The white light interference moire, which is diffuse light, is again converted into parallel light by the objective lens 33.

The white light interference moire converted into the parallel light passes the beam splitter 24 and formed into an image by the image forming lens25 on the imaging unit 40, so that the imaging unit 40 picks up the image of the white light interference moire.

Here, in the interference objective lens 30 shown in Fig. 2, the objective lens 33 is located between the beam splitter 34 and the beam splitter 24. Alternatively, two objective lenses may be respectively located between the beam splitter 34 and the workpiece W and between the beam splitter 34 and the reference mirror 35.

Hereunder, a measurement procedure of the workpiece shape performed by the shape measuring apparatus 1 according to this embodiment will be described.

Before starting the measurement, the workpiece W is placed at a predetermined position on the stage 10. Then the height of the interference objective lens 30 is adjusted by the Z-drive stage, so as to allow the imaging unit 40 to observe the white light interference moire.

First, the control unit 60 transmits the signal S to the drive unit 26 thereby causing the interference objective lens 30 to start the scanning. Then the control unit 60 acquires the distance information LI from the laser length measuring device 50. At the same time, the control unit 60 transmits the trigger signal T to the imaging unit 40, to cause the imaging unit 40 to pick up the image of the white light interference moire generated in the interference optical system 100, and acquires the image information PI representing the image of the white light interference moire. The control unit 60 then stores the distance information LI and the image information PI in association with each other, in the storage unit 63.

When the relative distance L measured by the laser length measuring device 50 varies by a predetermined amount (for instance, scores of nanometers), control unit 60 transmits the trigger signal T to the imaging unit 40 thereby causing the imaging unit 40 to pick up the image of the white light interference moire and acquiring the image information PI. Then the control unit 60 stores the distance information LI and the image information PI in association with each other, in the storage unit 63.

Further, the control unit 60 transmits the trigger signal T to the imaging unit 40 thereby causing the imaging unit 40 to pick up the image of the white light interference moire and acquiring the image information PI, each time the distance information LI from the laser length measuring device 50 varies by the predetermined amount. The control unit 60 then stores the distance information LI and the image information PI in association with each other in the storage unit 63, with respect to each of the distance information LI acquired at predetermined intervals.

Upon acquiring the image information PI a predetermined number of times, the control unit 60 calculates the height data of the surface of the workpiece, on the basis of the distance information LI and the image information PI stored in the storage unit 63. Here, the technique of calculating the height data of the surface of the workpiece from the distance information LI and the image information PI is widely known, and therefore detailed description will not be given.

As described above, the shape measuring apparatus 1 according to this embodiment causes the laser length measuring device 50 to measure the relative distance L between the stage 10 and the interference objective lens 30, thereby allowing the relative position of the interference objective lens 30 with respect to the stage 10 at the time that the white light interference moire is imaged to be accurately identified. Such a configuration allows the workpiece shape to be accurately measured, without being affected by minute fluctuation in relative distance L between the stage 10 and the interference objective lens 30 originating from vibration of the shape measuring apparatus 1, tolerance of driving accuracy of the XY-drive stage and the Z-drive stage, temperature fluctuation, and distortion of parts.

In this embodiment, the length measurement mirror 32 is located beside the interference objective lens 30 via the bracket 31. However, the length measurement mirror 32 may be mounted at a desired position with respect to the interference objective lens 30, without limitation to beside the interference objective lens 30.

In this embodiment, further, the laser length measuring device 50 is located on the stage 10, and the length measurement mirror 32 is provided to the interference objective lens 30. Alternatively, the length measurement mirror may be located on the stage 10 and the laser length measuring device 50 may be attached to the interference objective lens 30.

Further, the length measuring device is exemplified by the laser length measuring device 50 in this embodiment. Alternatively, a distance sensor based on triangulation or a static capacitance sensor may be employed as the length measuring device.

### Second Embodiment

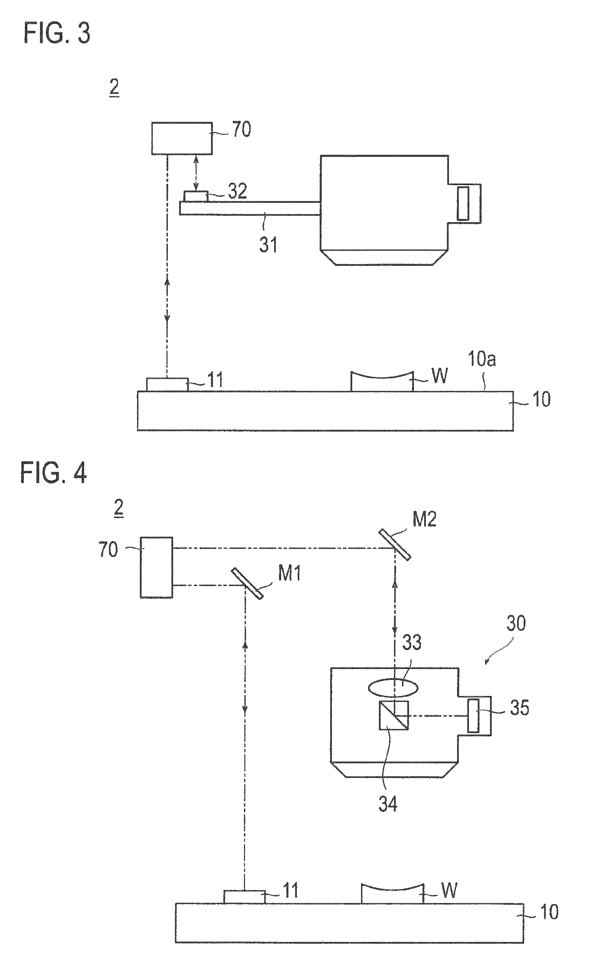

Referring now to Fig. 3, a shape measuring apparatus 2 according to a second embodiment of the present invention will be described. This embodiment is different from the first embodiment in that the laser length measuring device 50 is substituted with a differential laser length measuring device 70. Hereunder, the description of the constituents the same as those of the shape measuring apparatus 1 according to the first embodiment will not be repeated, but only the distinctive configuration of the shape measuring apparatus 2 according to this embodiment will be focused on.

As shown in Fig. 3, the shape measuring apparatus 2 according to this embodiment includes the differential laser length measuring device 70. In addition, length measurement mirrors 11, 32 are provided on the stage 10 and the bracket 31 respectively.

The differential laser length measuring device 70 is located above the bracket 31, and outputs a pair of laser beams. The laser beams are respectively emitted onto the length measurement mirror 11 on the stage 10 and the lengthmeasurement mirror 32 on the bracket 31. The differential laser length measuring device 70 then measures the difference between a distance from the differential laser length measuring device 70 to the length measurement mirror 11 on the stage 10 and a distance from the differential laser length measuring device 70 to the length measurement mirror 32 on the bracket 31, i.e., the relative distance L between the stage 10 and the interference objective lens 30. The distance information LI indicating the relative distance L between the stage 10 and the interference objective lens 30 measured by the differential laser length measuring device 70 is transmitted to the control unit 60.

The mentioned configuration eliminates the need to place the laser length measuring device 50 on the stage 10 or the interference objective lens 30, to thereby mitigate the limitation to the mounting position of the laser length measuring device 50, thus improving the convenience in use.

In this embodiment, the differential laser length measuring device 70 is located above the bracket 31. However, the differential laser length measuring device 70 may be located at a desired position.

### Third Embodiment

Proceeding to Fig. 4, a shape measuring apparatus 3 according to a third embodiment of the present invention will be described. This embodiment is different from the second embodiment in that the laser beam from the differential laser length measuring device 70 is emitted onto the reference mirror 35 of the interference objective lens 30. Hereunder, the description of the constituents the same as those of the shape measuring apparatus 2 according to the second embodiment will not be repeated, but only the distinctive configuration of the shape measuring apparatus 3 according to this embodiment will be focused on.

As shown in Fig. 4, in the shape measuring apparatus 3 according to this embodiment, the pair of laser beams outputted from the differential laser length measuring device 70 are respectively emitted onto the length measurement mirror 11 on the stage 10 via a reflecting mirror M1 and the reference mirror 35 of the interference objective lens 30 via a reflecting mirror M2. The surfaces of the beam splitter 34 and the reflecting mirrors M1, M2 are coated so as to restrict transmission of light having the wavelength of the laser beam. Here, the reflecting mirror M2 reflects the laser beam but transmits the white light WL.

The differential laser length measuring device 70 measures the difference between a distance from the differential laser length measuring device 70 to the length measurement mirror 11 on the stage 10 and a distance from the differential laser length measuring device 70 to the reference mirror 35 of the interference objective lens 30, i.e., the relative distance L between the stage 10 and the interference objective lens 30. The distance information LI indicating the relative distance L between the stage 10 and the interference objective lens 30 measured by the differential laser length measuring device 70 is transmitted to the control unit 60.

The mentioned configuration eliminates the need to attach the length measurement mirror 32 by means of the bracket 31, to thereby prevent a measurement error originating from a positional error in attaching the bracket 31, thus improving the measurement accuracy.

The present invention is in no way limited to the foregoing embodiments, but may be modified in various manners within the scope of the appended claims.

For example, the control unit 60 transmits the trigger signal T to the imaging unit 40 thereby causing the imaging unit 40 to pick up the image of the white light interference moire and acquiring the image information PI, in the first to the third embodiments. Alternatively, the control unit configured to simultaneously transmit a length measurement trigger signal TL and an image pickup trigger signal TP may transmit the length measurement trigger signal TL to the laser length measuring device 50 or the differential laser length measuring device 70 to thereby acquire the distance information LI indicating the relative distance L between the stage 10 and the interference objective lens 30, while transmitting the image pickup trigger signal TP to the imaging unit 40 to thereby acquire the image information PI representing the image of the white light interference moire.

Further, the control unit 60 is configured to acquire the image information PI representing the image of the white light interference moire picked up by the imaging unit 40, each time the relative distance L between the stage 10 and the interference objective lens 30 measured by the laser length measuring device 50 or the differential laser length measuring device 70 varies by a predetermined amount, in the first to the third embodiments. However, it is not mandatory to acquire the image information PI representing the image of the white light interference moire each time the relative distance L varies by a predetermined amount, and it suffices that the distance information LI and the image information PI are stored in association with each other.

Further, the control unit 60 transmits the trigger signal T to the imaging unit 40 to thereby acquire the image of the white light interference moire, while causing the interference objective lens 30 to scan without stopping, in the first to the third embodiments. Alternatively, the control unit 60 may stop the movement of the interference objective lens 30 when transmitting the trigger signal T to the imaging unit 40, to thereby acquire the image of the white light interference moire.

Still further, the drive unit 26 serves to move the interference objective lens 30, in the first to the third embodiments. However, the drive unit 26 may be configured to collectively move not only the interference objective lens 30 but also the microscope main body 20 and the interference optical system 100. Alternatively, the drive unit 26 may move the stage 10.

### Reference Signs List

- 1, 2, 3: Shape measuring apparatus
- 10: Stage
- 20: Microscope main body
- 21: White light source
- 26: Drive unit
- 30: Interference objective lens
- 32: Length measurement mirror
- 33: Objective lens
- 34: Beam splitter
- 35: Reference mirror
- 40: Imaging unit
- 50: Laser length measuring device
- 60: Control unit
- 70: Differential laser length measuring device
- 100: Interference optical system
- WL: White light
- PI: Image information
- LI: Distance information
- L: Relative distance
- ML: Measurement light
- RL: Reference light
- T: Trigger signal
- TL: Length measurement trigger signal
- TP: Image pickup trigger signal

## Claims

1. A shape measuring apparatus that measures a workpiece shape by using white light interference, the apparatus comprising:
a stage on which the workpiece is placed;
an interference optical system that irradiates the workpiece with white light to thereby generate a white light interference moire;
a drive unit that moves a position of one of the stage and the interference optical system in a direction of an optical axis;
a length measuring device that measures a relative distance between the stage and the interference optical system, the relative distance being changed by the drive unit upon moving the stage or the interference optical system; and
an imaging unit that images the white light interference moire to acquire contrast information of the white light interference moire that changes according to the relative distance.

2. The shape measuring apparatus according to Claim 1, further comprising a storage unit that stores therein distance information acquired by measuring the relative distance with the length measuring device and image information acquired by imaging the white light interference moire with the imaging unit, in association with each other.

3. The shape measuring apparatus according to Claim 1 or 2, further comprising a first control unit that transmits a trigger signal to the imaging unit according to the distance information acquired by measuring the relative distance with the length measuring device,
wherein the imaging unit images the white light interference moire when the trigger signal is transmitted.

4. The shape measuring apparatus according to Claim 3,
wherein the first control unit transmit the trigger signal to the imaging unit each time the relative distance measured by the length measuring device varies by a predetermined amount.

5. The shape measuring apparatus according to Claim 1 or 2, further comprising a second control unit that simultaneously transmits a length measurement trigger signal and an image pickup trigger signal to the length measuring device and the imaging unit, respectively,
wherein the length measuring device measures the relative distance when the length measurement trigger signal is transmitted, and the imaging unit images the white light interference moire when the image pickup trigger signal is transmitted.

6. The shape measuring apparatus according to any one of Claims 1 to 5,
wherein the length measuring device is provided in one of the interference optical system and the stage.

7. The shape measuring apparatus according to any one of Claims 1 to 5,
wherein the length measuring device is a laser length measuring device that outputs a first and a second laser beam,
the stage includes a first mirror that reflects the first laser beam, the interference optical system includes a second mirror that reflects the second laser beam, and
the relative distance between the stage and the interference optical system is measured by calculating a difference between a distance from the laser length measuring device to the stage measured by the first laser beam and a distance from the laser length measuring device to the interference optical systemmeasuredby the second laser beam.

8. The shape measuring apparatus according to Claim 7,
wherein the interference optical system includes an interference objective lens,
the interference objective lens includes:
an objective lens that focuses the white light onto the workpiece;
a beam splitter that splits the white light that has passed the objective lens into measurement light and reference light and synthesizes reflection of the measurement light and the reference light; and
a reference mirror that reflects the reference light, the second mirror is the reference mirror, and
the laser length measuring device measures the relative distance between the laser length measuring device and the interference optical system by using the second laser beam reflected by the reference mirror.

9. The shape measuring apparatus according to any one of Claims 1 to 8,
wherein the interference optical system includes an interference objective lens,
the drive unit moves the interference objective lens in the direction of the optical axis, and
the length measuring device measures the relative distance between the stage and the interference objective lens.

10. The shape measuring apparatus according to any one of Claims 1 to 9, further comprising a calculation unit that calculates height data of a surface of the workpiece, on the basis of the distance information acquired by measuring the relative distance with the length measuring device and the image information acquired by imaging the white light interference moire with the imaging unit.
